Europäisches Patentamt

(19) European Patent Office

Office européen des brevets

(11) Publication number: **0 040 904**
**B1**

# (12) EUROPEAN PATENT SPECIFICATION

(45) Date of publication of patent specification: **28.01.87**

(21) Application number: **81301468.5**

(22) Date of filing: **03.04.81**

(51) Int. Cl.⁴: **F 16 H 3/72**

(54) **Planetary gear assembly and application thereof.**

(30) Priority: **04.04.80 US 137428**

(43) Date of publication of application:
**02.12.81 Bulletin 81/48**

(45) Publication of the grant of the patent:
**28.01.87 Bulletin 87/05**

(84) Designated Contracting States:
**DE FR GB IT**

(56) References cited:
**AT-B- 130 064**
**CH-A- 452 303**
**DE-C- 910 371**
**FR-A-1 060 637**
**FR-A-1 530 736**
**FR-A-1 586 747**
**GB-A- 751 140**
**GB-A-1 101 131**
**GB-A-1 304 393**
**GB-A-1 436 491**
**US-A- 981 689**
**US-A-1 203 265**
**US-A-3 049 945**
**US-A-3 143 898**
**US-A-3 400 609**

(73) Proprietor: **Gabriele, Darcy**
**1890 - 5th Avenue**
**Prince George British Columbia V2M 1J5 (CA)**

(72) Inventor: **Gabriele, Darcy**
**1890 - 5th Avenue**
**Prince George British Columbia V2M 1J5 (CA)**

(74) Representative: **Thomson, Roger Bruce et al**
**POLLAK MERCER & TENCH High Holborn House**
**52-54 High Holborn**
**London WC1V 6RY (GB)**

(56) References cited:
**H. KLEIN "Die Planetenrad-Umlauf-getriebe",**
**1962 CARL HANSER VERLAG, München**
**Automatische Automobilgetriebe, J. Stüper,**
**1965, p. 185**

**Die Umlaufgetriebe, H.W. Müller, 1971, p. 209**
**SAE-Publication 720 724, sept. 1972, p. 1-12**

## Description

The present invention relates to an apparatus for transmitting power from two sources of rotary power. The apparatus is especially adapted for use in motor vehicles but is applicable wherever engines are to be applied to a variable load or to a load which is to be subjected to acceleration.

In many applications, such as in the operation of automobiles, a high torque must be available for starting and accelerating the vehicle from a standstill or in coping with heavy loads, while at higher velocities, a correspondingly lower torque is acceptable. Traditional automatic transmissions employ a fixed number of discrete gear ratios between the engine output and the transmission output in order to cover the range of gear ratios corresponding to a minimum velocity (or maximum gearing down) up to a maximum operating velocity. Moreover, changing from one gear ratio to another requires mechanical switching of gears. Generally, conventional automatic transmissions depend on significant slippage in a torque converter to cope with zero load velocity. Such slippage is wasteful of energy and results in significant inefficiency. By being limited for practical purposes to gear ratios of about 4 to 1 or 5 to 1 in low gear, relatively large engines are required to deal with acceleration requirements from standstill. Such engine capacity is greater than that required for normal operating speeds and results in correspondingly higher fuel consumption than would be used by an engine with smaller capacity.

A transmission system having two discrete engines and which incorporates planetary gear assemblies is known from Swiss patent CH—A—452303. Here however the planetary gear assemblies are linked only by a single, common planetary carrier.

According to the present invention there is provided a transmission system comprising a first source of rotary power having a first output coupling means, a second source of rotary power discrete from said first source and having a second output coupling means, and a pair of connected planetary gear assemblies each comprising at least one driving member, a driven follower member and a third member, characterised in that the two planetary gear assemblies are connected in tandem, and in that a primary driving member of the first assembly is coupled by the first coupling means to the first source of rotary power, two secondary driving members, one provided for each assembly, are connected together and are coupled by the second coupling means to the second source of rotary power, and the driven follower of the first assembly is coupled to the primary driving member of the second assembly. The features of the pre-characterising part of claim 1 are known from the aforesaid CH—A—452303.

When the driven follower member of the second assembly is a planetary carrier cage, then the primary and secondary driving members of the first assembly, in combination, are preferably other than a combination of the ring gear and sun gear. When the driven follower member of the second assembly is the planetary carrier cage and the ring gear and the sun gear of the first assembly, in combination, are a combination of the secondary driving and driven follower members of the first assembly, then the primary and secondary inputs to the first assembly, in combination, are preferably other than a combination of the planetary carrier cage and sun gear, and other than a pair of tandem-connected assemblies in which the planetary carrier cage of the first assembly is coupled to that of the second assembly and the ring gear of the first assembly is coupled to the sun gear of the second assembly. The driven follower member of the second assembly may be constrained to rotate in only one direction.

The first and second discrete sources of rotary power may, as an additional aspect of the invention, comprise first and second motors having respective first and second drive shafts. The absolute speeds of the motors and the speed of one of the motors relative to the other in this aspect are controlled by drive shaft velocity control means coupled to the motors. Translation gears are affixed to the drive shafts for translating rotary power motion therefrom to rotary motion of respective coaxial shafts coupled to respective primary and secondary driving members of the tandem-connected planetary gear assemblies. With such an arrangement no reactive components such as fluid couplings need to be incorporated to cause variation in the speed of rotation of one driving member of the first planetary gear assembly relative to the other in response to either load changes or a speed change of an engine source of rotary power when both first and second discrete sources of rotary power are obtained from the latter.

By employing electric motors for the first and second motors one may, through controlling the electric power applied to the motors by drive shaft velocity control means, independently vary the respective speeds of rotation of the two driving members of the first planetary gear assembly. It is even possible to use motors which can be reversed and hence operate for any arrangement of tandem-connected assemblies either in a forward or a reverse mode. The first and second coupling means in such a case is extremely simple, consisting of only speed adjusting and translating gears.

Incorporating a one-way clutch to constrain the driven follower member of the second planetary gear assembly to rotation in only one direction, namely the direction of rotation of the driving members of the first planetary gear assembly, ensures that the driven follower member will not go into accidental reverse such as may occur, for example, on start-up. Of course, for particular configurations of tandem-connected planetary gear assemblies, it is possible to employ a reverse mode of operation wherein the driven follower of the second planetary gear set rotates in a direction opposite to that of the driving members of the first assembly, in which case the one-way clutch would constrain the driven follower member to rotation in only a direction opposite to that of the driving members of the first assembly.

2

Preferably, the primary driving, secondary driving and driven follower members of the tandem-connected planetary gear assemblies are the planetary carrier cage, ring gear and sun gear, respectively.

The automatic transmission may have the primary driving, secondary driving and driven follower members coupled to the planetary carrier cage, ring and sun gears, respectively, of the first and second planetary gear sets. Such an arrangement produces an output which is extremely sensitive to changes in the relative input velocities and which can produce a zero output angular velocity with only a small change in either the velocity of the primary driving member with respect to the velocity of the secondary driving member of the first gear set or vice versa.

The foregoing automatic transmission provides continuous adjustment of the torque to suit load acceleration requirements and because of the large gear-down available makes it possible to use smaller engines that are currently impractical for use with conventional automatic transmissions.

Summary of the drawings

Figure 1 is an elevation view partly in section of a dual motor arrangement according to the invention utilizing internal combustion engines.

Figure 2 is a block diagram representation of a dual motor arrangement utilizing electric motors.

Figures 3 to 15 illustrate in schematic form thirteen different possible arrangements of the planetary gear sets of the automatic transmission.

Detailed description with reference to the drawings

In the drawings like reference numbers in the different figures indicate like components.

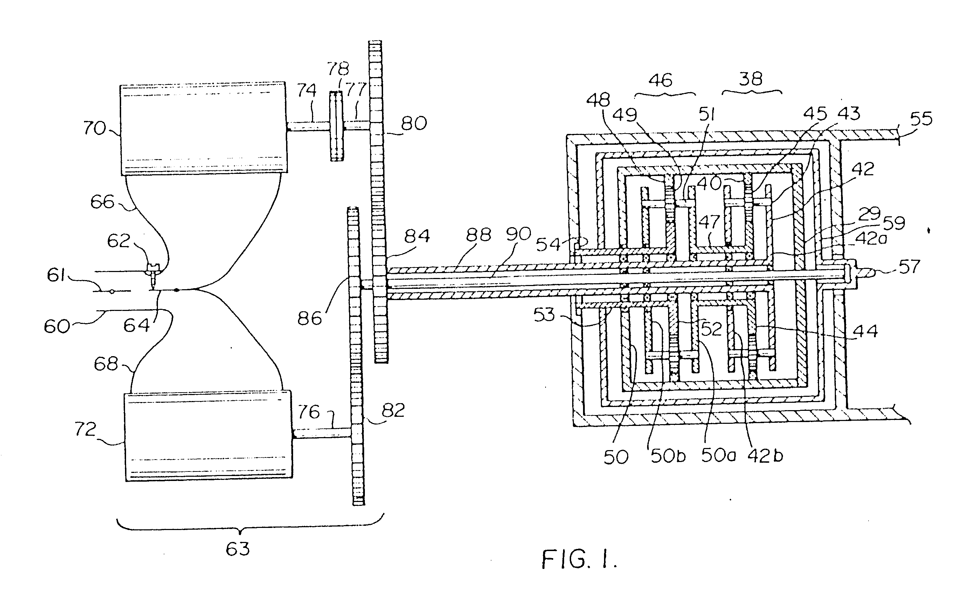

A dual motor driven embodiment of the invention utilizing a pair of internal combustion engines is illustrated in Figure 1. Here the two motors 70 and 72 are internal combustion engines powered by fuel which is delivered to manifolds 66 and 68 corresponding to the two engines 70 and 72, respectively. The overall fuel demand is set by a carburettor 60 having a throttle valve 61 and an air-fuel diversion valve 64. The latter valve 64 is adjusted by a calibration screw 62 which sets the relative amount of fuel delivered to each of the two manifolds 66 and 68. The output shaft 74 from the motor 70 is coupled to one plate of a clutch 78. The other plate of the latter clutch 78 is secured to a clutch shaft 77 rigidly fastened to a gear 80. The teeth of the gear 80 mesh with those of gear 84 which drives a hollow shaft 88. The output shaft 76 from the motor 72 drives a gear 82 whose teeth mesh with those of a second gear 86 coupled to an input shaft 90 which is coaxially contained within the hollow shaft 88. The coaxial shaft 88 drives one disc 42a of a pair of discs 42a and 42b of a planetary carrier cage 42 of a first planetary gear assembly 38. The solid shaft 90 drives a ring gear carrier 29 to which are affixed ring gears 40 and 48 corresponding to the first and second planetary gear assemblies 38 and 46, respectively. Journalled to the two discs 42a and 42b forming the planetary carrier cage 42 near their circumferential ends are a plurality of spaced planetary pinion axle shafts 43 to each of which is rigidly secured a planetary pinion gear 45. A planetary pinion gear 45 of the first gear assembly 38 meshes both with the ring gear 40 and with the sun gear 44 of the first gear assembly. The latter sun gear 44 is coupled to the first disc 50a of a pair of discs 50a and 50b of a planetary carrier cage 50 of the second gear assembly 46. Journalled to the two discs 50a and 50b forming the latter planetary carrier cage 50 near their outer peripheries are a plurality of spaced planetary pinion axle shafts 51 to each of which is secured a pinion gear 49. The teeth of the latter pinion gears 49 mesh with the teeth of ring gear 48 and with those of sun gear 52 of the second gear set 46. The sun gear 52 is coupled by means of a hollow shaft 53 and an attached output arm 59 to the output shaft 57. The hollow shaft 53 also is coupled to a one-way clutch 54 mounted in the transmission casing 55.

In operation the clutch 78 is released disconnecting drive shaft 74 from clutch shaft 77 and allowing the motor 70 to start without a load. Once the motor 70 has started, the clutch 78 connects the motor drive shaft 74 to the clutch shaft 77. Applying the vehicle brake (not shown) causes rotation through the planetary gear sets 38 and 46 of shaft 90, and, hence, rotation of drive shaft 76 coupled by gears 82 and 86 to the shaft 90. Ignition of the motor 72 will then result in its start-up. With both motors 70 and 72 in operation and coupled to the input shafts 88 and 90, respectively, the first and second planetary gear assemblies 38 and 46 operate as follows:

The sun gear 44 which is the driven follower member of the first planetary gear assembly 38 drives the planetary carrier cage 50 of the second planetary gear set 46 at an angular velocity $n_{S1}$ given by

$$n_{S1} = -(N_{R1}/N_{S1})n_R + (1 + N_{R1}/N_{S1})n_A \qquad (1)$$

where $N_{R1}$ and $N_{S1}$ are the number of teeth on the ring gear 40 and sun gear 44, respectively of the first planetary gear set 38 and $n_R$ and $n_A$ are the angular velocities of the latter mentioned ring gear 40 and planetary carrier cage 42, respectively. As a result of the ring gear 40 and planetary carrier cage 42 driving the second planetary gear assembly 46, the sun gear 52 of the latter rotates at an angular velocity $n_{S1}$ given by

$$n_{S2} = -[N_{R2}/N_{S2} + (1 + N_{R2}/N_{S2})N_{R1}/N_{S1}]n_R + (1 + N_{R2}/N_{S2})(1 + N_{R1}/N_{S1})n_A \qquad (2)$$

where $N_{R2}$ and $N_{S2}$ are the number of teeth on the ring gear 48 and sun gear 52, respectively, of the second planetary gear assembly 46. It can be seen that coefficients of $n_R$ and $n_A$ in the formula for $n_{S2}$ will be·

significantly greater than those for $n_{S1}$ for the values for $N_{S1}$, $N_{R2}$, and $N_{S2}$ generally employed. For example, if $N_{R1}=N_{R2}=42$ and $N_{S1}=N_{S2}=18$, then

$$n_{S1}=7/3\ n_R+10/3\ n_A, \text{ and} \tag{3}$$

$$n_{S2}=-91/9\ n_R+100/9\ n_A \tag{4}$$

Relatively small changes in $n_R$ relative to $n_A$ for values of $n_R$ slightly greater than $n_A$ will result in large changes in $n_{S2}$. This effect occurs because the coefficients of $n_R$ and $n_A$ in the formula for $n_{S2}$ are significantly greater than those for $n_{S1}$ for the values of $N_{R1}$, $N_{R2}$, $N_{S1}$ and $N_{S2}$ generally employed.

Rotation of the sun gear 52 of the second planetary gear assembly 46 drives the hollow shaft 53 coupled to the output shaft 57. The one-way clutch 54 prevents the output shaft 57 from undesirably reversing its direction of rotation.

In the transmission of Figure 1, control of the relative speeds of the two input shafts 88 and 90 is obtained by controlling the relative amount of fuel entering manifolds 66 and 68 by adjusting the fuel diversion valve 64. Thus, a fixed setting of the air fuel diversion valve 64 will result in a fixed effective gear ratio being applied to output shaft 57.

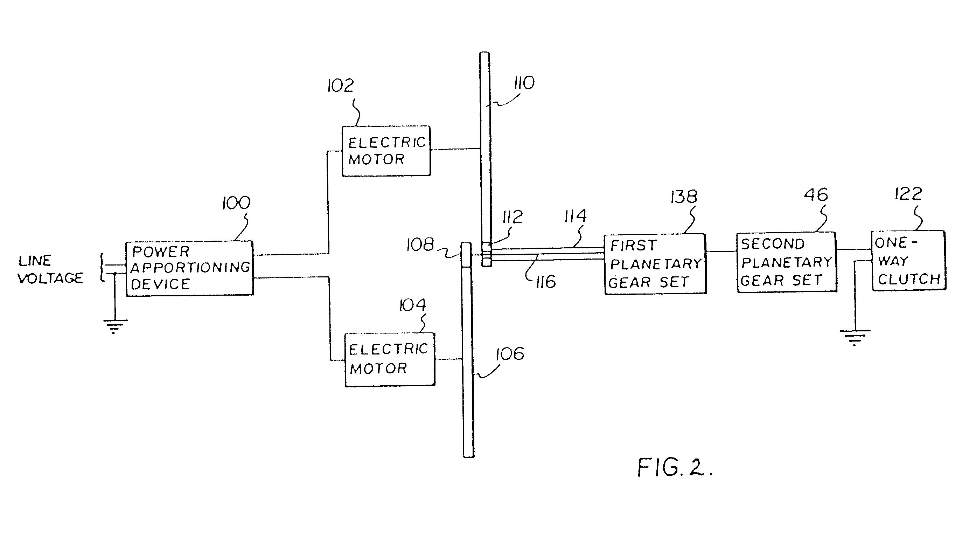

An alternative embodiment to that of Figure 1 is seen in Figure 2. The embodiment of Figure 2 utilizes electric power and features a pair of electric motors 102 and 104 driven by a power apportioning device 100, the power apportioning device 100 receiving line voltage which it distributes to motors 102 and 104. The electric motor 102 drives a gear 110 whose teeth mesh with those of a gear 112, the latter driving a hollow shaft 114. The electric motor 104 drives a gear 106 whose teeth mesh with those of a gear 108 rigidly affixed to shaft 116. The hollow shaft 114 couples to the primary input and the solid shaft 116 couples to the secondary input of the first planetary gear assembly 38. The secondary input of the first planetary gear assembly 38 is directly coupled to the secondary input of the second planetary gear assembly 46. The driven output follower from the first planetary gear assembly is directly coupled to the primary input of the second planetary gear assembly 46. The output from the second planetary gear assembly 46 couples to the input of a one-way clutch 122. The other input of the one-way clutch 122 couples to the transmission casing (not shown). The output of the one-way clutch 122 is coupled to a load (also not shown).

The operation of the embodiment of Figure 2 is similar to that of Figure 1 except that the electric motors 102 and 104 are driven by the power supplied by the power apportioning device 100 which sets the absolute speeds of each of the motors 102 and 104.

Moreover, in view of the absence of any ignition requirement of the electric motors, there is no clutch at the output of either of the electric motors 102 and 104 as appears in the output of the motor 70 of Figure 1. The operation of the embodiment of Figure 2 is otherwise identical to that as described for Figure 1.

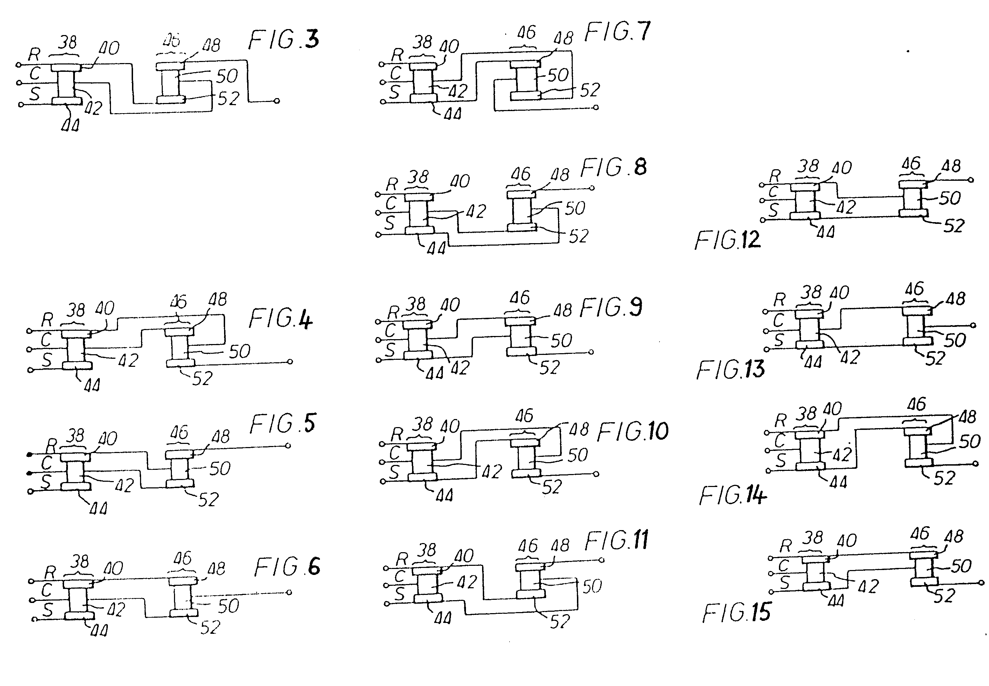

Figures 3 to 15 illustrate thirteen different configurations of connecting a pair of planetary gear sets in tandem. In each of the Figures like reference numbers indicate like parts so that, for example, the first planetary gear assembly 38 of Figure 3 is labelled with the same reference number as the first planetary gear assemblies of Figures 4 to 15. In Figure 3 the three possible inputs R, C and S of the first planetary gear set 38 correspond to inputs which drive the ring gear 40, the planetary carrier cage 42 and the sun gear 44, respectively. The ring gear 40 of the first planetary gear assembly is coupled to the sun gear 52 of the second planetary gear assembly 46 and the planetary carrier cage 42 of the first gear assembly 38 is coupled to the carrier cage 50 of the second gear set 46. The output is taken from the ring gear 48 of the second gear assembly 46.

The interconnections of the planetary gear assemblies for Figures 4 to 15 in the light of the discussion of the interconnections of the gear sets illustrated in Figure 3 is self-evident. It is also obvious that there are three possible combinations of the three inputs R, C and S, one of which corresponds to the inputs being applied directly to the second assembly, bypassing the first. Table 3 below illustrates the output speed from the configuration of Figure 3 for the ratio of the number of teeth of the ring gear $N_R$, planetary gears $N_A$ and sun gear $N_s$ of $N_R:N_A:N_s=42:18:12$ and for each of these inputs where for example a combination of C and R, with C as the primary input and R as the secondary input, is denoted by C/R. Output speeds are given as a function of primary and secondary speeds, with all speeds being on a relative basis. Output speeds for the same ratios of gear teeth as in Table 3 for the same combination of inputs corresponding to Figures 4 to 15 are given in Tables 4 to 15, respectively.

Tables 4 to 15, similar to Table 3, for the configurations of Figures 4 to 15 are also shown below.

In Tables 4 to 15 inclusive, in addition to tabulations of output speeds for a given selection of the three possible inputs R, C and S as primary input and secondary input there is also recorded output speeds for values of the primary and secondary inputs listed being interchanged. For example, in Table 3, when the planetary carrier cage, C, of the first assembly 38 is the secondary input and the sun gear, S, is the primary input, values with the secondary input fixed at 10 and the primary ranging from −45 to 20 are given in the second column headed S/C. With the primary fixed at 10 and the secondary ranging from −45 to 20 values of the output are listed in the first column headed (S/C)$^r$.

TABLE 3
Figure 3

| Input | | Output | | | |
|---|---|---|---|---|---|
| Primary | Sec. | (S/C) | S/C | S/R | (S/R) |
| 20 | 10 | 18.2 | 11.8 | 14.3 | 15.7 |
| 15 | 10 | 14.1 | 10.9 | 12.1 | 12.9 |
| 14 | 10 | 13.3 | 10.7 | 11.7 | 12.3 |
| 13 | 10 | 12.4 | 10.6 | 11.3 | 11.7 |
| 12 | 10 | 11.6 | 10.4 | 10.9 | 11.1 |
| 11 | 10 | 10.8 | 10.2 | 10.4 | 10.6 |
| 10 | 10 | 10 | 10 | 10 | 10 |
| 9 | 10 | 9.2 | 9.8 | 9.6 | 9.4 |
| 8 | 10 | 8.4 | 9.6 | 9.1 | 8.9 |
| 7 | 10 | 7.6 | 9.4 | 8.7 | 8.3 |
| 6 | 10 | 6.7 | 9.3 | 8.3 | 7.7 |
| 5 | 10 | 5.9 | 9.1 | 7.9 | 7.1 |
| 0 | 10 | 1.8 | 8.2 | 5.7 | 4.3 |
| −3 | 10 | −.6 | 7.6 | 4.4 | 2.6 |
| −8 | 10 | −4.7 | 6.7 | 2.3 | −.3 |
| −15 | 10 | −10.4 | 5.4 | −.7 | −4.3 |
| −45 | 10 | −34.9 | −.1 | −13.6 | −21.4 |

TABLE 4
Figure 4

| Input | | Output | | | |
|---|---|---|---|---|---|
| Primary | Sec. | $(S/C)^r$ | S/C | S/R | $(S/R)^r$ |
| 25 | 10 | 46.2 | −11.4 | −.5 | 35.5 |
| 20 | 10 | 34.3 | −4.3 | 3 | 27 |
| 15 | 10 | 22.1 | 2.9 | 6.5 | 18.5 |
| 14 | 10 | 19.7 | 4.3 | 7.2 | 16.8 |
| 13 | 10 | 17.3 | 5.7 | 7.9 | 15.1 |
| 12 | 10 | 14.9 | 7.1 | 8.6 | 12.3 |
| 11 | 10 | 12.4 | 8.6 | 9.3 | 11.1 |
| 10 | 10 | 10 | 10 | 10 | 10 |
| 9 | 10 | 7.6 | 11.4 | 10.7 | 8.9 |
| 8 | 10 | 5.1 | 12.9 | 11.4 | 7.7 |
| 7 | 10 | 2.7 | 14.3 | 12.1 | 6.6 |
| 6 | 10 | 13 | 15.7 | 12.8 | 5.5 |
| 5 | 10 | −2.1 | 17.1 | 13.5 | 4.4 |
| 0 | 10 | −14.3 | 24.3 | 17 | −7 |

**0 040 904**

TABLE 5
Figure 5

| Input | | Output | | | |
|---|---|---|---|---|---|
| Primary | Sec. | $(S/C)^r$ | S/C | S/R | $(S/R)^r$ |
| 90 | 10 | 139 | −39 | −.3 | 100.3 |
| 27 | 10 | 37.4 | −.4 | 7.8 | 29.2 |
| 20 | 10 | 26.1 | 3.9 | 8.7 | 21.3 |
| 15 | 10 | 18.1 | 6.9 | 9.4 | 15.6 |
| 14 | 10 | 16.4 | 7.6 | 9.5 | 14.8 |
| 13 | 10 | 14.8 | 8.2 | 9.6 | 13.4 |
| 12 | 10 | 13.1 | 8.8 | 9.7 | 12.3 |
| 11 | 10 | 11.6 | 9.4 | 9.9 | 11.1 |
| 10 | 10 | 10 | 10 | 10 | 10 |
| 9 | 10 | 8.4 | 10.6 | 10.1 | 8.9 |
| 8 | 10 | 6.8 | 11.2 | 10.3 | 7.7 |
| 7 | 10 | 5.2 | 11.8 | 10.4 | 6.6 |
| 6 | 10 | 3.4 | 12.4 | 10.5 | 5.5 |
| 5 | 10 | 1.9 | 13.1 | 10.6 | 4.4 |
| 0 | 10 | −6.1 | 16.1 | 11.3 | −1.3 |

TABLE 6

| Input | | Output | | | |
|---|---|---|---|---|---|
| Primary | Sec. | (S/C)$^r$ | S/C | S/R | (S/R)$^r$ |
| 45 | 10 | 55.5 | −.5 | 13.2 | 41.9 |
| 20 | 10 | 23 | 7 | 10.9 | 19.1 |
| 15 | 10 | 16.5 | 8.5 | 10.5 | 14.6 |
| 14 | 10 | 15.2 | 8.8 | 10.4 | 13.6 |
| 13 | 10 | 13.9 | 9.1 | 10.3 | 12.7 |
| 12 | 10 | 12.6 | 9.4 | 10.2 | 11.8 |
| 11 | 10 | 11.3 | 9.7 | 10.1 | 10.9 |
| 10 | 10 | 10 | 10 | 10 | 10 |
| 9 | 10 | 8.7 | 10.3 | 9.9 | 9.1 |
| 8 | 10 | 7.4 | 10.6 | 9.8 | 8.2 |
| 7 | 10 | 6.1 | 10.9 | 9.7 | 7.3 |
| 6 | 10 | 4.8 | 11.2 | 9.6 | 6.4 |
| 5 | 10 | 3.5 | 11.5 | 9.5 | 5.5 |
| 0 | 10 | −3 | 13 | 9.1 | .9 |
| −1 | 10 | −4.3 | 13.3 | 9.0 | −.01 |
| −102 | 10 | −135.6 | 43.6 | −.1 | −91.9 |

TABLE 7

| Input | | Output | | | |
|---|---|---|---|---|---|
| Primary | Sec. | $(R/C)^r$ | R/C | $(R/S)^r$ | R/S |
| 20 | 10 | 36.3 | −6.3 | 17.9 | 12.1 |
| 15 | 10 | 23.2 | 1.8 | 13.9 | 11.1 |
| 14 | 10 | 20.5 | 3.5 | 13.2 | 10.8 |
| 13 | 10 | 12.9 | 5.1 | 12.4 | 10.6 |
| 12 | 10 | 15.3 | 6.7 | 11.6 | 10.4 |
| 11 | 10 | 12.6 | 8.4 | 10.8 | 10.2 |
| 10 | 10 | 10 | 10 | 10 | 10 |
| 9 | 10 | 7.4 | 11.6 | 9.2 | 9.8 |
| 8 | 10 | 4.7 | 13.3 | 8.4 | 9.6 |
| 7 | 10 | 2.1 | 14.5 | 7.6 | 9.4 |
| 6 | 10 | −.5 | 16.5 | 6.8 | 9.2 |
| 5 | 10 | −3.1 | 18.2 | 6.1 | 9 |
| 0 | 10 | −16.3 | 26.3 | 2.1 | 7.9 |
| −3 | 10 | −24.3 | 36.1 | −.3 | 7.3 |
| −40 | 10 | −121.7 | 91.7 | −29.5 | −.5 |

TABLE 8

| Input | | Output | | | |
|---|---|---|---|---|---|
| Primary | Sec. | R/C | (R/C)$^r$ | (R/S)$^r$ | R/S |
| 45 | 10 | −106.7 | 161.7 | 55.5 | −.5 |
| 20 | 10 | −23.3 | 53.3 | 23 | 7 |
| 15 | 10 | −6.7 | 31.7 | 16.5 | 8.5 |
| 14 | 10 | −3.3 | 27.3 | 15.2 | 8.8 |
| 13 | 10 | 0 | 23.2 | 13.9 | 9.1 |
| 12 | 10 | 3.3 | 18.7 | 12.6 | 9.4 |
| 11 | 10 | 6.7 | 14.3 | 11.3 | 9.7 |
| 10 | 10 | 10 | 10 | 10 | 10 |
| 9 | 10 | 13.3 | . 5.7 | 8.7 | 10.3 |
| 8 | 10 | 16.7 | 1.3 | 7.4 | 10.6 |
| 7 | 10 | 20 | −3 | 6.1 | 10.9 |
| 6 | 10 | 23.3 | −7.3 | 4.8 | 11.2 |
| 5 | 10 | 26.7 | −11.6 | 3.5 | 11.5 |
| 0 | 10 | 43.3 | −33.3 | −3 | 13 |

TABLE 9

| Input | | Output | | | |
|---|---|---|---|---|---|
| Primary | Sec. | R/C | (R/C)$^r$ | (R/S)$^r$ | R/S |
| 20 | 10 | −67.8 | 97.8 | 36.3 | −6.3 |
| 15 | 10 | −28.9 | 53.9 | 23.2 | 1.8 |
| 14 | 10 | −21.2 | 45.1 | 20.5 | 3.5 |
| 13 | 10 | −13.3 | 36.3 | 17.9 | 5.1 |
| 12 | 10 | −5.6 | 27.6 | 15.3 | 6.7 |
| 11 | 10 | 2.2 | 18.8 | 12.6 | 8.4 |
| 10 | 10 | 10 | 10 | 10 | 10 |
| 9 | 10 | 17.8 | 1.2 | 7.4 | 11.6 |
| 8 | 10 | 25.6 | −7.6 | 4.7 | 13.3 |
| 7 | 10 | 33.3 | −16.3 | 2.1 | 14.9 |
| 6 | 10 | 41.1 | −25.1 | −.5 | 16.5 |
| 5 | 10 | 48.9 | −33.9 | −3.1 | 18.2 |
| 0 | 10 | 87.8 | −77.8 | −16.3 | 26.3 |

**0 040 904**

TABLE 10

| Input | | Output | | | |
|---|---|---|---|---|---|
| Primary | Sec. | R/C | (R/C)$^r$ | (R/S)$^r$ | R/S |
| 20 | 10 | 64.4 | −34.4 | −3.3 | 33.3 |
| 15 | 10 | 37.2 | −12.2 | 3.3 | 21.7 |
| 14 | 10 | 31.8 | −7.8 | 4.7 | 19.3 |
| 13 | 10 | 26.3 | −3.3 | 6 | 17 |
| 12 | 10 | 20.9 | 1.1 | 7.3 | 14.7 |
| 11 | 10 | 15.4 | 5.6 | 8.7 | 12.3 |
| 10 | 10 | 10 | 10 | 10 | 10 |
| 9 | 10 | 4.6 | 14.4 | 11.3 | 7.7 |
| 8 | 10 | −.9 | 18.9 | 12.7 | 5.3 |
| 7 | 10 | −6.3 | 23.3 | 14 | 3 |
| 6 | 10 | −11.8 | 27.8 | 15.3 | .7 |
| 5 | 10 | −17.2 | 32.2 | 16.7 | −1.7 |
| 0 | 10 | −44.4 | 54.4 | 23.3 | −13.3 |

TABLE 11

| Input | | Output | | | |
|---|---|---|---|---|---|
| Primary | Sec. | (C/S)$^r$ | C/S | C/R | (C/R)$^r$ |
| 27 | 10 | 37.4 | −.4 | 91 | −54 |
| 20 | 10 | 26.1 | 3.9 | 57.6 | −27.6 |
| 15 | 10 | 18.1 | 6.9 | 33.8 | −8.8 |
| 14 | 10 | 16.4 | 7.6 | 29 | −.5 |
| 13 | 10 | 14.8 | 8.2 | 24.3 | −1.3 |
| 12 | 10 | 13.2 | 8.7 | 19.5 | 2.5 |
| 11 | 10 | 11.6 | 9.4 | 13.3 | 6.2 |
| 10 | 10 | 10 | 10 | 10 | 10 |
| 9 | 10 | 8.4 | 10.6 | 5.2 | 13.8 |
| 8 | 10 | 6.8 | 11.2 | .5 | 17.5 |
| 7 | 10 | 5.2 | 11.8 | −4.3 | 21.3 |
| 6 | 10 | 3.6 | 12.4 | −9 | 25 |
| 5 | 10 | 1.9 | 13.1 | −13.8 | 28.8 |
| 0 | 10 | −6.1 | 16.1 | −37.6 | 47.6 |

11

**0 040 904**

TABLE 12

| Input | | Output | | | |
|---|---|---|---|---|---|
| Primary | Sec. | $(C/S)^r$ | C/S | C/R | $(C/R)^r$ |
| 20 | 10 | −.4 | 30.4 | −4.3 | 34.3 |
| 15 | 10 | 4.8 | 20.2 | 2.3 | 22.1 |
| 14 | 10 | 5.8 | 18.2 | 4.3 | 19.7 |
| 13 | 10 | 6.9 | 16.1 | 5.7 | 17.3 |
| 12 | 10 | 7.9 | 14.1 | 7.1 | 14.9 |
| 11 | 10 | 9 | 12 | 8.6 | 12.4 |
| 10 | 10 | 10 | 10 | 10 | 10 |
| 9 | 10 | 11 | 7.9 | 11.4 | 7.6 |
| 8 | 10 | 12.1 | 5.9 | 12.9 | 5.1 |
| 7 | 10 | 13.1 | 3.9 | 14.3 | 2.7 |
| 6 | 10 | 14.2 | 1.8 | 15.7 | .3 |
| 5 | 10 | 15.2 | −.2 | 17.1 | −2.1 |
| 0 | 10 | 20.4 | −10.4 | 24.3 | −14.3 |

TABLE 13

| Input | | Output | | | |
|---|---|---|---|---|---|
| Primary | Sec. | $(R/C)^r$ | R/C | $(R/S)^r$ | R/S |
| 25 | 10 | 35.5 | −.5 | 17.7 | 17.4 |
| 20 | 10 | 27 | 3 | 15.1 | 14.9 |
| 15 | 10 | 18.5 | 6.5 | 12.6 | 12.5 |
| 14 | 10 | 16.8 | 7.2 | 12 | 12 |
| 13 | 10 | 15.1 | 7.9 | 11.5 | 11.5 |
| 12 | 10 | 13.4 | 8.6 | 11 | 11 |
| 11 | 10 | 11.7 | 9.3 | 10.5 | 10.5 |
| 10 | 10 | 10 | 10 | 10 | 10 |
| 9 | 10 | 8.3 | 10.7 | 9.5 | 9.5 |
| 8 | 10 | 6.6 | 11.4 | 8.9 | 9 |
| 7 | 10 | 4.9 | 12.1 | 8.5 | 8.5 |
| 6 | 10 | 3.2 | 12.8 | 8 | 8 |
| 5 | 10 | 1.5 | 13.5 | 7.5 | 7.6 |
| 0 | 10 | −7 | 17 | 4.9 | 5.1 |
| −11 | 10 | −25.7 | 24.7 | −.7 | −.3 |

12

TABLE 14

| Input | | Output | | | |
|---|---|---|---|---|---|
| Primary | Sec. | C/S | (C/S)$^r$ | C/R | (C/R)$^r$ |
| 20 | 10 | 57.6 | −27.6 | −67.8 | 97.8 |
| 15 | 10 | 33.8 | −8.8 | −28.9 | 53.9 |
| 14 | 10 | 29 | −5 | −21.1 | 45.1 |
| 13 | 10 | 24.3 | −1.3 | −13.3 | 36.3 |
| 12 | 10 | 19.5 | 2.5 | −5.6 | 27.6 |
| 11 | 10 | 14.8 | 6.2 | 2 | 18.8 |
| 10 | 10 | 10 | 10 | 10 | 10 |
| 9 | 10 | 5.2 | 13.8 | 17.8 | 1.2 |
| 8 | 10 | .5 | 17.5 | 25.6 | −7.6 |
| 7 | 10 | −4.3 | 21.2 | 33.3 | −16.3 |
| 6 | 10 | −9 | 25 | 41.1 | −25.1 |
| 5 | 10 | −13.8 | 28.8 | 48.9 | −33.8 |
| 0 | 10 | −37.6 | 47.6 | 87.8 | −77.8 |

TABLE 15
Figure 15

| Input | | Output | | | |
|---|---|---|---|---|---|
| Primary | Sec. | C/S | (C/S)$^r$ | C/R | (C/R)$^r$ |
| 20 | 10 | −23.3 | 53.3 | 121.1 | −91.1 |
| 15 | 10 | −6.7 | 31.2 | 65.6 | −40.6 |
| 14 | 10 | −3.3 | 27.3 | 54.4 | −30.4 |
| 13 | 10 | 0 | 23 | 43.3 | −20.3 |
| 12 | 10 | 3.3 | 18.7 | 32.2 | −10.2 |
| 11 | 10 | 6.7 | 14.3 | 21.1 | −.1 |
| 10 | 10 | 10 | 10 | 10 | 10 |
| 9 | 10 | 13.3 | 5.7 | −1.1 | 20.1 |
| 8 | 10 | 16.7 | 1.3 | −12.2 | 30.2 |
| 7 | 10 | 20 | −3 | −23.3 | 40.3 |
| 6 | 10 | 23.3 | −7.3 | −34.4 | 50.4 |
| 5 | 10 | 26.7 | −11.7 | −45.6 | 60.6 |
| 0 | 10 | 43.3 | −33.3 | −101.1 | 111.1 |

**0 040 904**

It will be observed that Table 15 corresponds to the configuration of Figure 1 for the input corresponding to C/R. In the latter case in which the planetary carrier cage and the ring gear are the primary and secondary inputs, respectively, it is observed that there will be zero input when the secondary input has an angular velocity of 10 RPM and that of the primary input is between 9 and 10 RPM (although the units of RPM are used, any units may be selected as the values indicated are relative ones). In fact the value corresponding to a zero output of the primary input angular velocity is 9.1 RPM. Below 9.1 RPM the output changes direction going into rotation in a direction reverse to that of the driving angular velocities of the primary and secondary inputs. It will also be observed that at equal primary and secondary velocities the output velocity of the planetary gear arrangement is equal to that of each of the input velocities. It will also be observed that in the configuration of Figure 15 for C/R, actual operation of the automatic transmission takes place over only a very narrow part of the Table indicated, insofar as the relative velocity of primary and secondary inputs are concerned. The actual velocity range of the primary input relative to the secondary will probably be no more than .91 to 1.1 or 9.1 RPM to 11 RPM as seen in Table 15.

All of the configurations in Figures 4 to 15 will function adequately provided the ratio of primary and secondary velocity is allowed to vary over a sufficiently large range. Obviously a requirement for adequate functioning is that a large enough variation of primary to secondary velocity will drive the output to zero without the need to reverse either of the primary or secondary velocities. However, it should be noted that even if a reversal of one of the inputs is required, a configuration of the planetary gear sets necessitating such a reversal could be made operative with the configurations illustrated in Figure 2, as one of the electric motors could easily be selected which could reverse its direction of rotation to accommodate such a requirement. It will be observed that some of the configurations do not have a marked gearing down effect as does the configuration in Figure 15 previously discussed. In such cases additional gearing down may be obtained by compounding additional planetary gear assemblies after the second planetary gear assembly. However, the commercial practicality of such a solution in certain cases may be questionable.

Based on the foregoing criteria for operability it will be observed that several of the embodiments illustrated in Figures 4 to 15 are inoperable. Consequently the configuration of Figure 3 is inoperable for each of the inputs tabulated in Table 3.

The configurations of Figures 6, 7 and 13 are also inoperable when the two inputs are a combination of the ring gear and sun gear of the first planetary gear assembly.

One may elect for certain configurations such as that of Figure 15 to operate in a reverse mode in which the output shaft from the tandem-connected planetary gear assemblies rotates in a direction reverse to that of the driving members of the first planetary gear assembly. In this case a one-way clutch would have to be mounted reverse to that of its mounting for forward rotation and the driving speed of the first and second coupling means adjusted accordingly by speed adjusting gears if necessary.

The advantages derived from using rotary gears are as follows. Since two engines are used, each can be half the size of the single engine they replace and still give equal power. However, since the transmission is capable of greater gear reduction solving the problem of lack of torque at low engine r.p.m., each of the two engines can again be reduced to half so the total volume reduction of the working chambers is to 1/4 size.

The biggest problem with rotary engines is the problem of the wear of the apex seal. The friction on the seals is a function of r.p.m. and of the radices of rotation of the rotors. But the radius of rotation of the rotors varies with the cube of the volume approximately so if each of two engines are 1/4 size of the engine they replace, the radius of rotation is $\sqrt[3]{1\frac{3}{4}}=.631$ approximately and the friction is automatically reduced by about 1/3 as compared to an ordinary rotary, thereby increasing the life expectancy of the apex seal.

**Claims**

1. A transmission system comprising a first source of rotary power (70; 102) having a first output coupling means (74, 78, 77, 80, 84, 88; 110, 112, 114), a second source of rotary power (72; 104) discrete from said first source and having a second output coupling means (76, 82, 86, 90; 106, 108, 116), and a pair of connected planetary gear assemblies (38, 46) each comprising at least one driving member, a driven follower member and a third member, characterised in that the two planetary gear assemblies (38, 46) are connected in tandem, and in that a primary driving member (42—45, etc.) of the first assembly (38) is coupled by the first coupling means to the first source of rotary power (70; 102), two secondary driving members (40, 48 etc.), one provided for each assembly (38, 46), are connected together and are coupled by the second coupling means to the second source of rotary power (72; 104), and the driven follower member (44) of the first assembly (38) is coupled to the primary driving member (49, 50a, 50b, 51, etc.) of the second assembly (46).

2. A transmission system as claimed in claim 1, characterised in that the first and second sources of rotary power comprise:
(a) first and second motors (70, 72; 102, 104) having first and second drive shafts respectively;
(b) drive shaft velocity control means coupled to said motors for controlling both the absolute speed of at least one of said motors and the relative speed of one of said motors relative to the other; and
(c) translation gears (80, 84, 82, 86; 110, 112, 106, 108) affixed to said drive shafts for translating rotary

14

motion therefrom to rotary motion of respective coaxial shafts (88, 90; 114, 116) coupled to respective primary and secondary driving members of the tandem-connected planetary gear assemblies (38; 46).

3. A transmission system as claimed in claim 2, characterised in that said first and second motors (70; 72) are internal combustion engines, said speed control means controls the fuel supplied to a carburettor (61) common to both engines and the apportionment of this fuel to the engines, and further characterised by means (78) for selectively reversibly decoupling at least one of said motor drive shafts from said planetary gear assembly.

4. A transmission system as claimed in claim 2, characterised in that said first and second motors (102, 104) are electric and said drive shaft velocity control means (100) controls the electric power applied to each of the motors.

5. A transmission system as claimed in any preceding claim, characterised in that the primary driving member, the secondary driving member and the driven follower member are the planetary carrier cage, the ring gear, and the sun gear, respectively of the first and second planetary gear assemblies.

6. A transmission system as claimed in any of claims 1 to 4, characterised in that the primary driving member, the secondary driving member and the driven follower member of the first planetary gear assembly are the planetary carrier cage, the ring gear and the sun gear respectively, and the primary driving member, the secondary driving member and the driven follower member of the second planetary gear assembly are the planetary carrier cage, the ring gear, and the sun gear, respectively.

7. A transmission system as claimed in claim 1, characterised in that means are provided for independently controlling the speed of one of the first and second sources of rotary power with respect to the other source, the speed of said other source being constant or independently controllable.

8. A transmission system as claimed in claim 2, characterised in that the first and second motors are reversible.

9. A transmission system as claimed in claim 1, in that the driven output of the system is obtained from the driven follower member of the second planetary gear assembly (46).

10. A transmission system as claimed in claim 9, characterised by means (54; 122) for constraining the driven follower member of the second planetary gear assembly (46) to rotate in only one direction.

11. A transmission system as claimed in claim 9 or 10, characterised in that at least one of the first and second sources of rotary power is obtained from an engine source coupling means for coupling to an engine source of rotary power.

12. A transmission system as claimed in claim 9, characterised in that the primary driving member of the first assembly is the planetary carrier cage, the secondary driving member of the first assembly is the ring gear, the driven follower member of the first assembly is the sun gear; and in that the primary driving· member of the second assembly is the planetary carrier cage, the secondary driving member of the second assembly is the ring gear, and the driven follower member of the second assembly is the sun gear.

13. A transmission system as claimed in claim 9, characterised in that the primary driving member of the first assembly is the planetary carrier cage, the secondary driving member of the first assembly is the ring gear, the driven follower member of the first assembly is the sun gear; and in that the primary driving member of the second assembly is the ring gear, the secondary driving member of the second assembly is the planetary carrier cage, and the driven follower member of the second assembly is the sun gear.

14. A transmission system as claimed in claim 9, 10 or 11, characterised in that when the driven follower member of the second assembly is a planetary carrier cage, then the primary and secondary driving members of the first assembly, in combination, are other than a combination of the ring gear and sun gear, and when the driven follower member of the second assembly is the planetary carrier cage and the ring gear and sun gear of the first assembly, in combination, are a combination of the secondary driving and driven follower members of the first assembly, then the primary and secondary inputs to the first assembly, in combination, are other than a combination of the planetary carrier cage and sun gear, and other than a pair of tandem-connected assemblies in which the planetary carrier cage of the first assembly is coupled to that of the second assembly and the ring gear of the first assembly is coupled to the sun gear of the second assembly.

15. A transmission system as claimed in claim 14, characterised in that the carrier of one assembly is connected to the carrier of the other assembly.

16. A transmission system as claimed in claim 14, characterised in that the two inputs are connected to the two carriers.

17. A transmission system as claimed in claim 14, characterised in that the inputs are connected to the carrier and sun gear, the ring gear of each set is connected to the other ring gear, and the output is taken from a ring gear.

18. A transmission system as claimed in claim 14, characterised in that the inputs are connected to the carrier and ring gear, and the sun gear of each set is connected to the other sun gear, and the output is taken from a sun gear.

19. A transmission system as claimed in claim 14, characterised in that the inputs are connected to the carrier and sun gear, the other sun gear and a ring gear are interconnected, and the output is taken from the same.

20. A transmission system as claimed in claim 14, characterised in that the inputs are connected to the

0 040 904

ring gear and carrier, the other ring gear and a sun are interconnected, and the output is taken from the same.

**Patentansprüche**

1. Getriebe mit einer ersten Drehkraftquelle (70; 102), die eine erste Ausgangskupplungseinrichtung (74, 78, 77, 80, 84, 88; 110, 112, 114) aufweist, einer zweiten Drehkraftquelle (72; 104), die von der ersten Drehkraftquelle getrennt ist und eine zweite Ausgangskupplungseinrichtung (76, 82, 86, 90; 106, 108, 116) aufweist, und mit einem Paar von miteinander verbundenen Planetenradanordnungen (38, 46), von denen jede zumindest ein Antriebsglied, ein angetriebenes Folgeglied oder ein drittes Glied umfasst, dadurch gekennzeichnet, dass die beiden Planetenradanordnungen (38, 46) tandemartig miteinander verbunden sind, und dass ein primäres Antriebsglied (42—45 etc.) der ersten Anordnung (38) durch die erste Kupplungseinrichtung mit der ersten Drehkraftquelle (70; 102) gekuppelt ist, dass zwei sekundäre Antriebsglieder (40, 48, etc.), jeweils eine für jede Anordnung (38, 46), miteinander verbunden und durch die zweite Kupplungseinrichtung mit der zweiten Drehkraftquelle (72, 101) gekuppelt sind, und dass das angetriebene Folgeglied (44) der ersten Anordnung (38) mit dem primären Antriebsglied (49, 50a, 50b, 51, etc.) der zweiten Anordnung (46) gekuppelt ist.

2. Getriebe nach Anspruch 1, dadurch gekennzeichnet, dass die erste und zweite Drehkraftquelle umfasst:

(a) erste und zweite Motoren (70, 72; 102, 104) mit einer ersten bzw. zweiten Antriebswelle;

(b) Antriebswellen-Geschwindigkeitssteuereinrichtung, die mit den Motoren gekuppelt ist, um sowohl die absolute Drehzahl zumindest eines der Motoren und die relative Drehzahl eines der Motoren relativ zum anderen Motor zu steuern; und

(c) Übersetzungszahnräder (80, 84, 82, 86; 110, 112, 106, 108), die an den Antriebswellen für das Übersetzen der Drehbewegung davon auf die Drehbewegung der jeweiligen Koaxialwellen (88, 90, 114, 116) befestigt sind, wobei letztere jeweils mit den primären und sekundären Antriebsgliedern der tandemartig miteinander verbundenen Planetenradanordnungen (38; 46) gekupplet sind.

3. Getriebe nach Anspruch 2, dadurch gekennzeichnet, dass der erste und zweite Motor (70; 72) Brennkraftmaschinen sind, dass die Drehzahlsteuereinrichtung den Brennstoff steuert, der eines beiden Maschinen gemeinsamen Vergaser (61) zugeführt wird und zum Steuern der Zumessung des Brennstoffs zu den Maschinen, und weiterhin gekennzeichnet durch Mittel (78) zum wahlweisen reversiblen Entkuppeln zumindest einer der Motorantriebswellen von der Planetenradanordnung.

4. Getriebe nach Anspruch 2, dadurch gekennzeichnet, dass der erste und zweite Motor (102, 104) Elektromotoren sind, und dass die Steuereinrichtung (100) zum Steuern der Drehgeschwindigkeit der Antriebswelle, die jedem der Motoren zugeführte elektrische Energie steuert.

5. Getriebe nach einem der vorhergehenden Ansprüche, dadurch gekennzeichnet, dass das primäre Antriebsglied, das sekundäre Antriebsglied und das angetriebene Folgeglied den Planetenträgerkäfig, das Ringzahnrad bzw. das Sonnenrad der ersten und zweiten Planetenradanordnung bilden.

6. Getriebe nach einem der Ansprüche 1 bis 4, dadurch gekennzeichnet, dass das primäre Antriebsglied, das sekundäre Antriebsglied und das angetriebene Folgeglied der ersten Planetenradanordnung den Planetenträgerkäfig, das Ringzahnrad bzw. das Sonnenrad bilden und dass das primäre Antriebsglied, das sekundäre Antriebsglied und das angetriebene Folgeglied der zweiten Planetenradanordnung den Planetenträgerkäfig, das Ringzahnrad bzw. das Sonnenrad bilden.

7. Getriebe nach Anspruch 1, dadurch gekennzeichnet, dass Mittel zum unabhängigen Steuern der Drehgeschwindigkeit einer der ersten und zweiten Drehkraftquellen in Beziehung zu anderen Quelle vorgesehen sind, wobei die Drehgeschwindigkeit der anderen Quelle konstant oder unabhängig steuerbar ist.

8. Getriebe nach Anspruch 2, dadurch gekennzeichnet, dass der erste und zweite Motor reversibel sind.

9. Getriebe nach Anspruch 1, dadurch gekennzeichnet, dass der angetrieben Ausgang des Getriebes vom angetriebenen Folgeglied der zweiten Planetenradanordnung (46) erhalten wird.

10. Getriebe nach Anspruch 9, gekennzeichnet durch Mittel (54; 122), um das angetriebene Folgeglied der zweiten Planetenradanordnung (46) zu einer Drehung in nur eine Richtung zu zwingen.

11. Getriebe nach Anspruch 9 oder 10, dadurch gekennzeichnet, dass zumindest eine der ersten und zweiten Drehkraftquelle von einer Motor-Quelle-Kupplungseinrichtung für das Kuppeln des Motors mit der Drehkraftquelle erhalten wird.

12. Getriebe nach Anspruch 9, dadurch gekennzeichnet, dass das primäre Antriebsglied der ersten Anordnung der Planetenradkäfig, das sekundäre Antriebsglied der ersten Anordnung das Ringzahnrad und das angetriebene Folgeglied der ersten Anordnung das Sonnenrad ist, und dass das primäre Antriebsglied der zweiten Anordnung der Planetenträgerkäfig, das sekundäre Antriebsglied der zweiten Anordnung das Ringzahnrad und das angetriebene Folgeglied der zweiten Anordnung das Sonnenrad ist.

13. Getriebe nach Anspruch 9, dadurch gekennzeichnet, dass das primäre Antriebsglied der ersten Anordnung der Planetenträgerkäfig, das sekundäre Antriebsglied der ersten Anordnung das Ringzahnrad, das angetriebene Folgeglied der ersten Anordnung das Sonnenrad ist und dass das primäre Antriebsglied der zweiten Anordnung das Ringzahnrad, das sekundäre Antriebsglied der zweiten Anordnung der Planetenträgerkäfig und das angetrieben Folgeglied der zweiten Anordnung das Sonnenrad ist.

16

14. Getriebe nach Anspruch 9, 10 oder 11, dadurch gekennzeichnet, dass, wenn das angetriebene Folgeglied der zweiten Anordnung ein Planetenträgerkäfig ist, dann das primäre und sekundäre Antriebsglied der ersten Anordnung in Kombination etwas anderes sind als eine Kombination des Ringzahnrades und des Sonnenrades, und dass, wenn das angetriebene Folgeglied der zweiten Anordnung der Planetenträgerkäfig und das Ringzahnrad und das Sonnenrad der ersten Anordnung in Kombination eine Kombination der sekundären Antriebs- und angetriebenen Folgeglieder der ersten Anordnung sind, dann die primäre und sekundären Eingänge zur ersten Anordnung in Kombination etwa anderes sind als eine Kombination des Planetenträgerkäfigs und des Sonnenrades, und etwas anderes als ein Paar von tandemartig verbundenen Anordnungen, bei denen der Planetenträgerkäfig der ersten Anordnung mit der der zweiten Anordnung gekuppelt ist und das Ringzahnrad der ersten Anordnung mit dem Sonnenrad der zweiten Anordnung gekuppelt ist.

15. Getriebe nach Anspruch 14, dadurch gekennzeichnet, dass der Träger der einen Anordnung mit dem Träger der anderen Anordnung verbunden ist.

16. Getriebe nach Anspruch 14, dadurch gekennzeichnet, dass die beiden Eingänge mit den beiden Trägern verbunden sind.

17. Getriebe nach Anspruch 14, dadurch gekennzeichnet, dass die Eingänge mit dem Träger und dem Sonnenrad verbunden sind, dass das Ringzahnrad jedes Satzes mit dem anderen Ringzahnrad verbunden ist, und dass der Ausgang vom Ringzahnrad genommen wird.

18. Getriebe nach Anspruch 14, dadurch gekennzeichnet, dass die Eingänge mit dem Träger und dem Ringzahnrad verbunden sind, dass das Sonnenrad jedes Satzes mit dem anderen Sonnenrad verbunden ist, und dass der Ausgang vom Sonnenrad genommen wird.

19. Getriebe nach Anspruch 14, dadurch gekennzeichnet, dass die Eingänge mit dem Träger und dem Sonnenrad verbunden sind, dass das andere Sonnenrad und das Ringzahnrad miteinander verbunden sind und dass der Ausgang von demselben genommen wird.

20. Getriebe nach Anspruch 14, dadurch gekennzeichnet, dass die Eingänge mit dem Ringzahnrad und dem Träger verbunden sind, dass das andere Ringzahnrad und ein Sonnenrad miteinander verbunden sind, und dass der Ausgang von demselben genommen wird.

## Revendications

1. Système de transmission comprenant une première source de force motrice de rotation (70; 102) qui comporte des premiers moyens d'accouplement de sortie (74, 78, 77, 80, 84, 88; 110, 112, 114), une seconde source de force motrice de rotation (72; 104), indépendante de la première source et comportant des seconds moyens d'accouplement de sortie (76, 82, 86, 90; 106, 108, 116), et une paire d'ensembles d'engrenages planétaires (38, 46) reliés l'un à l'autre, dont chacun comprend au moins un organe menant, un organe commandé mené et un troisième organe, caractérisé en ce que les deux ensembles d'engrenages planétaires (38, 46) sont montés en tandem et en ce qu'un organe menant primaire (42—45, etc.) du premier ensemble (38) est accouplé par les premiers moyens d'accouplement à la première source de force motrice de rotation (70; 102), deux organes menants secondaires (40, 48, etc.), respectivement associés aux ensembles (38, 46), sont reliés l'un à l'autre et sont accouplés par les seconds moyens d'accouplement à la seconde source de force motrice de rotation (72; 104) et l'organe commandé mené (44) du premier ensemble (38) est accouplé à l'organe menant primaire (49, 50a, 50b, 51, etc.) du second ensemble (46).

2. Système de transmission selon la revendication 1, caractérisé en ce que la première et la seconde sources de force motrice de rotation comprennent:

(a) un premier et un second moteurs (70, 72; 102, 104) ayant respectivement un premier et un second arbres moteurs;

(b) des moyens de commande de vitesse d'arbres moteurs, accouplés à ces moteurs, pour commander à la fois la vitesse absolue de l'un au moins des moteurs et la vitesse relative de l'un des moteurs par rapport à l'autre;

(c) des roues de translation (80, 84, 82, 86; 110, 112, 106, 108) fixées aux arbres moteurs pour en transformer le mouvement de force motrice de rotation en mouvement de rotation d'arbres coaxiaux respectifs (88, 90; 114, 116) accouplés respectivement aux organes menants primaires et secondaires des ensembles d'engrenages planétaires (38; 46) montés en tandem.

3. Système de transmission selon la revendication 2, caractérisé en ce que le premier et le second moteurs (70; 72) sont des moteurs à combustion interne, lesdits moyens de commande de vitesse contrôlent le carburant délivré à un carburateur (61) commun aux deux moteurs et la distribution de ce carburant aux moteurs, et caractérisé en outre par des moyens (78) pour désaccoupler sélectivement de façon réversible l'un au moins des arbres moteurs d'avec l'ensemble d'engrenages planétaires.

4. Système de transmission selon la revendication 2, caractérisé en ce que le premier et le second moteurs (102, 104) sont électriques et en ce que lesdits moyens de commande de vitesse des arbres moteurs (100) contrôlent la puissance electrique appliquée à chacun des moteurs.

5. Système de transmission selon l'une quelconque des revendications 1 à 4, caractérisé en ce que l'organe menant primaire, l'organe menant secondaire et l'organe commandé mené sont respectivement

**0 040 904**

la cage de roues intermédiaires planétaires, la couronne de train planétaire et la roue solaire du premier et du second ensembles d'engrenages planétaires.

6. Système de transmission selon l'une quelconque des revendications 1 à 4, caractérisé en ce que l'organe menant primaire, l'organe menant secondaire et l'organe commandé mené du premier ensemble d'engrenages planétaires sont respectivement la cage de roues intermédiaires planétaires, la couronne de train planétaire et la roue solaire, et en ce que l'organe menant primaire, l'organe menant secondaire et l'organe commandé mené du second ensemble d'engrenages planétaires sont respectivement la cage de roues intermédiaires planétaires, la couronne de train planétaire et la roue solaire.

7. Système de transmission selon la revendication 1, caractérisé en ce que des moyens sont prevus pour commander indépendamment la vitesse de l'une de la première et de la seconde sources de force motrice de rotation par rapport à l'autre source, la vitesse de cette autre source étant constante ou commandable indépendamment.

8. Système de transmission selon la revendication 2, caractérisé en ce que le premier et le second moteurs sont réversibles.

9. Système de transmission selon la revendication 1, caractérisé en ce que la sortie menée du système est obtenue à partir de l'organe commandé mené du second ensemble d'engrenages planétaires (46).

10. Système de transmission selon la revendication 9, caractérisé par des moyens (54; 122) pour contraindre l'organe commandé mené du second ensemble d'engrenages planétaires (46) à ne tourner que dans un sens.

11. Système de transmission selon la revendication 9 ou 10, caractérisé en ce que l'une au moins de la première et de la seconde sources de force motrice de rotation est obtenue à partir de moyens d'accouplement à un moteur source qui assurent l'accouplement à un moteur servant de source de force motrice de rotation.

12. Système de transmission selon la revendication 9, caractérisé en ce que l'organe menant primaire du premier ensemble est la cage de roues intermédiaires planétaires, l'organe menant secondaire du premier ensemble est la couronne de train planétaire, l'organe commandé mené du premier ensemble est la roue solaire, et en ce que l'organe menant primaire du second ensemble est la cage de roues intermédiaires planétaires, l'organe menant secondaire du second ensemble est la couronne de train planétaire et l'organe commandé mené du second ensemble est la roue solaire.

13. Système de transmission selon la revendication 9, caractérisé en ce que l'organe menant primaire du premier ensemble est la cage de roues intermédiaires planétaires, l'organe menant secondaire du premier ensemble est la couronne de train planétaire et l'organe commandé mené du premier ensemble est la roue solaire, et en ce que l'organe menant primaire du second ensemble est la couronne de train planétaire, l'organe menant secondaire du second ensemble est la cage de roues intermédiaires planétaires et l'organe commandé mené du second ensemble est la roue solaire.

14. Système de transmission selon l'une quelconque des revendications 9 à 11, caractérisé en ce que quand l'organe commandé mené du second ensemble est une cage de roues intermédiaires planétaires, les organes menants primaire et secondaire du premier ensemble, en combinaison, sont autres qu'une combinaison de la couronne de train planétaire et de la roue solaire, et en ce que quand l'organe commandé mené du second ensemble est la cage de roues intermédiaires planétaires et que la couronne de train planétaire et la roue solaire du premier ensemble, en combinaison, sont une combinaison des organes menant secondaire et commandé mené du premier ensemble, les entrées primaire et secondaire du premier ensemble, en combinaison, sont autres qu'une combinaison de la cage de roues intermédiaires planétaires et de la roue solaire et autres qu'une paire d'ensembles montés en tandem dans laquelle la cage de roues intermédiaires planétaires du premier ensemble est accouplée à celle du second ensemble et la couronne de train planétaire du premier ensemble est accouplée à la roue solaire du second ensemble.

15. Système de transmission selon la revendication 14, caractérisé en ce que la cage de roues intermédiaires de l'un des ensembles est raccordé à la cage de roues intermédiaires de l'autre ensemble.

16. Système de transmission selon la revendication 14, caractérisé en ce que les deux entrées sont raccordées aux deux cages de roues intermédiaires.

17. Système de transmission selon la revendication 14, caractérisé en ce que les entrées sont raccordées à la cage de roues intermédiaires et à la roue solaire, la couronne de train planétaire de chaque jeu est raccordée à l'autre couronne de train planétaire et la sortie est prise sur une couronne de train planétaire.

18. Système de transmission selon la revendication 14, caractérisé en ce que les entrées sont raccordées à la cage de roues intermédiaires et à la couronne de train planétaire, la roue solaire de chaque jeu est raccordée à l'autre roue solaire et la sortie est prise sur une roue solaire.

19. Système de transmission selon la revendication 14, caractérisé en ce que les entrées sont raccordées à la cage de roues intermédiaires et à la roue solaire, l'autre roue solaire et une couronne de train planétaire sont interconnectées et la sortie est prise sur celles-ci.

20. Système de transmission selon la revendication 14, caractérisé en ce que les entrées sont raccordées à la couronne de train planétaire et à la cage de roues intermédiaires, l'autre couronne de train planétaire et une roue solaire sont interconnectées et la sortie est prise sur celles-ci.

FIG. I.

0 040 904

FIG. 2.

FIG.3

FIG.4

FIG.5

FIG.6

FIG.7

FIG.8

FIG.9

FIG.10

FIG.11

FIG.12

FIG.13

FIG.14

FIG.15

0 040 904